# EUROPEAN PATENT APPLICATION

(11) **EP 4 576 353 A1**
(43) Date of publication of application: **25.06.2025**
(21) Application number: 24863820.7
(22) Date of filing: 19.04.2024
(51) Int. Cl.: H01M 50/183, H01M 50/105, H01M 50/211, H01M 50/249

(54) **BATTERY CELL AND, BATTERY MODULE INCLUDING SAME, AND BATTERY PACK INCLUDING SAME, AND VEHICLE INCLUDING SAME**

(30) Priority: 12.09.2023 KR 20230121322
(71) Applicant: LG Energy Solution, Ltd., Seoul 07335 (KR)
(72) Inventor: SEON, Sang-Ok, Daejeon 34122 (KR); LEE, Yong-Seon, Daejeon 34122 (KR); JANG, Kyung-Soo, Daejeon 34122 (KR); HWANG, Jae-Cheol, Seoul 34122 (KR)
(74) Representative: Plasseraud IP
(86) International application number: PCT/KR2024/005365
(87) International publication number: WO 2025/058158

(57) **Abstract**

A battery cell, a battery module including the same, a battery pack including the same and a vehicle including the same are disclosed. The battery cell according to an embodiment of the present disclosure includes an electrode assembly including a first electrode plate having a first polarity, a second electrode plate having a second polarity and a separator interposed between the first electrode plate and the second electrode plate; an electrode lead connected to the electrode assembly; a cell case accommodating the electrode assembly, and on which the electrode lead is supported, the cell case having a sealing portion; and an internal pressure uniformization member coupled to at least part of the sealing portion of the cell case.

## Description

### TECHNICAL FIELD

The present application claims priority to Korean Patent Application No. 10-2023-0121322 filed on September 12, 2023 in the Republic of Korea, the disclosure of which is incorporated herein by reference.

The present disclosure relates to a battery cell, a battery module including the same, a battery pack including the same and a vehicle including the same, and more particularly, to a battery cell in which the internal pressure of a pouch is uniformly maintained, a battery module including the same, a battery pack including the same and a vehicle including the same.

### BACKGROUND

As secondary batteries can be easily applied to various types of products and have electrical properties such as high energy density, they are commonly used in not only portable devices but also electric vehicles (EVs) or hybrid electric vehicles (HEVs) that are powered by an electrical power source.

Secondary batteries can remarkably reduce the use of fossil fuels. In addition to the primary advantage, another advantage is that they do not generate by-products from the use of energy. Due to these advantages, secondary batteries are gaining attention as a new eco-friendly and energy efficient source of energy.

The types of secondary batteries widely used at present include lithium ion batteries, lithium polymer batteries, nickel cadmium batteries, nickel hydrogen batteries, nickel zinc batteries and so on. A unit secondary battery cell has an operating voltage of about 2.5V to 4.5V.

Accordingly, when higher output voltage is required, a plurality of battery cells is connected in series to form a battery module or a battery pack. Additionally, the battery module or battery pack may be formed by connecting the plurality of battery cells in parallel according to the required charge/discharge capacity. Accordingly, the number of battery cells in the battery module or battery pack and their electrical connection may be variously set depending on at least one of the required output voltage or charge/discharge capacity.

Meanwhile, the commonly used types of secondary battery cells include cylindrical, prismatic and pouch-type battery cells. Here, the pouch-type battery cell includes, for example, a positive electrode material, a separator, a negative electrode material and an electrolyte solution and an aluminum pouch accommodating them. Additionally, the pouch has a sealing portion at the edge to prevent the electrolyte solution from leaking out of the pouch.

However, gases are generated in the pouch during charging and discharging of the battery cell, and when swelling occurs in the pouch, the gases may leak through the sealing portion at a certain unexpected location, causing fire, which may adversely affect the battery cell or the battery module.

### SUMMARY

### Technical Problem

The present disclosure is directed to providing a battery cell that prevents gases in the battery cell from leaking through any sealing portion and uniformly maintains the internal pressure of a cell case, a battery module including the same, a battery pack including the same and a vehicle including the same.

The present disclosure is further directed to providing a battery cell that lowers the fire risk, a battery module including the same, a battery pack including the same and a vehicle including the same.

The technical problems of the present disclosure to be solved are not limited to the aforementioned problems, and these and other problems will be clearly understood by those skilled in the art from the following description.

### Technical Solution

According to an aspect of the present disclosure, there may be provided a battery cell including an electrode assembly including a first electrode plate having a first polarity, a second electrode plate having a second polarity and a separator interposed between the first electrode plate and the second electrode plate; an electrode lead connected to the electrode assembly; a cell case accommodating the electrode assembly, and on which the electrode lead is supported, the cell case having a sealing portion; and an internal pressure uniformization member coupled to at least part of the sealing portion of the cell case.

In an embodiment, the cell case may have a long side and a short side, and the internal pressure uniformization member may be coupled to the sealing portion located near the electrode lead along the short side of the cell case.

In an embodiment, the internal pressure uniformization member may include a magnet portion formed with a length corresponding to a length of the short side of the cell case and disposed along the short side; and a magnet coupling portion coupled to the magnet portion.

In an embodiment, the magnet portion may include a neodymium magnet.

In an embodiment, the cell case may have a long side and a short side, and the internal pressure uniformization member may be coupled to the cell case along the long side of the cell case.

In an embodiment, the internal pressure uniformization member may include a magnet portion formed with a length corresponding to a length of the long side of the cell case and disposed along the long side; and a magnet coupling portion coupled to the magnet portion.

In an embodiment, the magnet portion may include a first part covering the cell case along the long side of the cell case; a second part that forms an end portion of the first part, and is electrically connected to a first electrode lead of the electrode lead; and a third part that forms the other end portion of the first part, and is electrically connected to a second electrode lead of the electrode lead.

In an embodiment, the battery cell may include a first conductor and a second conductor, the first conductor may be coupled to the second part, and the second conductor may be coupled to the third part.

In an embodiment, the magnet coupling portion may include a fourth part covering the cell case along the long side of the cell case; a fifth part that forms one end portion of the fourth part, and is electrically connected to a first electrode lead of the electrode lead; and a sixth part that forms the other end portion of the fourth part, and is electrically connected to a second electrode lead of the electrode lead.

In an embodiment, a foam pad may be coupled to the fourth part.

In an embodiment, the battery cell may include a third conductor and a fourth conductor, the third conductor may be coupled to the fifth part, and the fourth conductor may be coupled to the sixth part.

In an embodiment, the magnet portion may have a connection hole, a plug may be coupled to the magnet coupling portion, and when a plurality of cell cases is stacked, each cell case to which the internal pressure uniformization member is coupled, the plug of a first cell case among the plurality of cell cases may be inserted into the connection hole of a second cell case among the plurality of cell cases.

In an embodiment, the plug may be detachably coupled to the magnet coupling portion.

In an embodiment, an insulating layer may be formed between the plug and the magnet coupling portion.

In an embodiment, the second part and the third part may be a magnet, and the first part may be a non-magnet connected to the magnet.

In an embodiment, the magnet portion may include a neodymium magnet.

Meanwhile, according to another aspect of the present disclosure, there may be provided a battery module including at least one battery cell as described above, a battery pack including at least one battery cell as described above, and a vehicle including at least one battery cell as described above.

### Advantageous Effects

The embodiments of the present disclosure may prevent gases in the battery cell from leaking through any sealing portion and uniformly maintain the internal pressure of the cell case.

Additionally, it may be possible to reduce the fire risk.

However, the effects that can be obtained through the present disclosure are not limited to the aforementioned effects, and these and other technical effects will be clearly understood by those skilled in the art from the following description.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus the present disclosure should not be construed as being limited to the drawings.
FIG. 1 is a front view of a battery cell according to a first embodiment of the present disclosure.
FIG. 2 is a side view of FIG. 1.
FIG. 3 is a plan view of a battery cell according to a second embodiment of the present disclosure.
FIG. 4 is an enlarged view of section A in FIG. 3.
FIG. 5 is a plan view of a plurality of battery cells according to a second embodiment of the present disclosure.
FIG. 6 is an enlarged view of section B in FIG. 5.
FIG. 7 is a diagram showing the plurality of battery cells coupled to each other in FIG. 5.
FIG. 8 is an enlarged view of section C in FIG. 7.
FIG. 9 is a plan view of a battery cell according to a third embodiment of the present disclosure.
FIG. 10 is a plan view of a plurality of battery cells according to a third embodiment of the present disclosure.
FIG. 11 is a diagram showing the plurality of battery cells coupled to each other in FIG. 10.
FIG. 12 is a diagram schematically showing a battery module including a battery cell according to each embodiment of the present disclosure.
FIG. 13 is a diagram schematically showing a battery pack including a battery module according to each embodiment of the present disclosure.
FIG. 14 is a diagram illustrating a vehicle including a battery pack according to each embodiment of the present disclosure.

### DETAILED DESCRIPTION

Hereinafter, exemplary embodiments of the present disclosure will be described in detail with reference to the accompanying drawings. It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation. Therefore, the description provided herein and illustrations in the drawings are provided to describe some exemplary embodiments of the present disclosure, but not intended to fully describe the technical aspect of the present disclosure, so it should be understood that a variety of other equivalents and modifications could have been made thereto at the time of filing the patent application.

In the drawings, the size of each element or a particular part of the element is exaggerated, omitted or schematically shown for convenience and clarity of description. Accordingly, the size of each element does not exactly reflect the actual size. When it is determined that a detailed description of related known functions or elements may unnecessarily obscure the subject matter of the present disclosure, the description is omitted.

It should be further understood that when an element is referred to as being 'connected to' or 'coupled to' another element, it can be directly connected or coupled to the other element but the element may be indirectly 'connected to' or 'coupled to' the other element through a linking element.

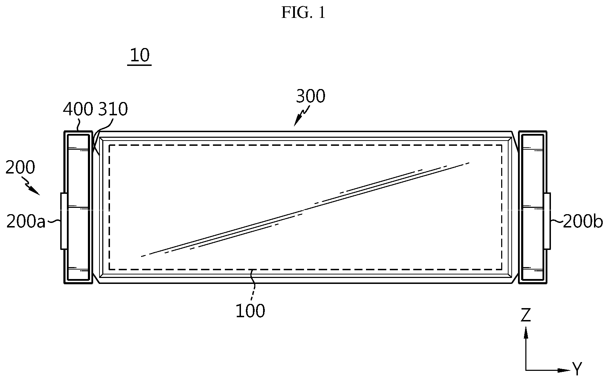

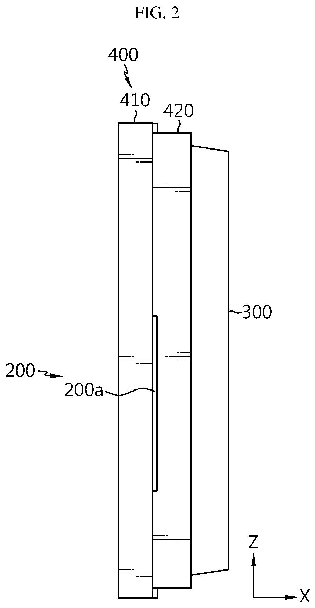

FIG. 1 is a front view of a battery cell according to a first embodiment of the present disclosure, and FIG. 2 is a side view of FIG. 1.

Referring to FIGs. 1 and 2, the battery cell 10 according to the first embodiment of the present disclosure includes an electrode assembly 100, an electrode lead 200, a cell case 300 and an internal pressure uniformization member 400. Here, the battery cell 10 may include a pouch-type battery cell 10.

The electrode assembly 100 may include a first electrode plate having a first polarity, a second electrode plate having a second polarity and a separator interposed between the first electrode plate and the second electrode plate. For example, the first electrode plate may be a positive or negative electrode plate, and the second electrode plate may correspond to an electrode plate having the opposite polarity to the first electrode plate. That is, when the first electrode plate is a positive electrode plate, the second electrode plate may be a negative electrode plate, and when the first electrode plate is a negative electrode plate, the second electrode plate may be a positive electrode plate.

The electrode lead 200 is electrically connected to the electrode assembly 100. The electrode lead 200 may be connected to one or two sides of the electrode assembly 100 in the length direction. Hereinafter, for convenience of description, description will be made based on the electrode lead 200 connected to two sides of the electrode assembly 100 in the length direction.

The electrode lead 200 may include, for example, a first electrode lead 200a and a second electrode lead 200b. Here, the first electrode lead 200a may be connected to the first electrode plate, and may be positive or negative in polarity. Additionally, the second electrode lead 200b may be connected to the second electrode plate, and may be positive or negative in polarity. Here, the first electrode lead 200a and the second electrode lead 200b have opposite polarity. That is, when the first electrode lead 200a is positive in polarity, the second electrode lead 200b is negative in polarity, and when the first electrode lead 200a is negative in polarity, the second electrode lead 200b is positive in polarity.

The cell case 300 accommodates the electrode assembly 100. That is, the cell case 300 may include an accommodating space in which the electrode assembly 100 is received. In this instance, the cell case 300 may accommodate an electrolyte, and may also accommodate the electrode assembly 100 so that the electrode assembly 100 is wetted by the electrolyte.

The cell case 300 may be, for example, of a pouch type. For example, the cell case 300 may be made of a metal such as aluminum (Al), but is not limited thereto. Hereinafter, for convenience of description, description is made based on the cell case 300 of a pouch type and made of aluminum.

The cell case 300 may be configured to support the electrode lead 200. In this instance, the electrode lead 200 may be extended from the cell case 300 by a preset length. Additionally, the cell case 300 may have a sealing portion 310 along the side edge. For example, the sealing portion 310 prevents an electrolyte solution from leaking out of the cell case 300 and prevents gases generated during charging and discharging of the battery cell 10 from leaking out of the cell case 300.

Referring to FIG. 1, the cell case 300 has a long side and a short side. On the basis of FIG. 1, the Y direction is a long side direction, and the Z direction is a short side direction.

The internal pressure uniformization member 400 is coupled to at least part of the sealing portion 310 of the cell case 300. The battery cell 10 generates gases in the cell case 300 during charging and discharging, and when swelling occurs in the pouch, the gases may leak through the sealing portion 310 at any unexpected location. However, gas leaks increases the fire risk, and preventive measures are necessary.

The battery cell 10 according to the first embodiment of the present disclosure includes the internal pressure uniformization member 400 coupled to the sealing portion 310 of the cell case 300 to prevent gases from leaking through any sealing portion 310 in the event that the gases are generated in the cell case 300, and uniformly maintain the internal pressure applied to the cell case 300. Accordingly, it is possible to reduce the fire risk.

Referring to FIG. 1, the internal pressure uniformization member 400 may be coupled to the sealing portion 310 located near the electrode lead 200 along the short side of the cell case 300.

Here, the internal pressure uniformization member 400 may be coupled to the sealing portion 310 of the cell case 300 by various methods. For example, the internal pressure uniformization member 400 may include a magnet portion 410 and a magnet coupling portion 420.

Referring to FIG. 2, the magnet portion 410 is formed with a length corresponding to the short side length of the cell case 300 and disposed along the short side. The magnet portion 410 may be made of a variety of magnetic materials, and for example, may include a neodymium magnet, but is not limited thereto.

Additionally, referring back to FIG. 2, the magnet coupling portion 420 is coupled to the magnet portion 410. That is, the magnet coupling portion 420 may be made of various materials that respond with the magnet. For example, the magnet coupling portion 420 may be made of steel, but is not limited thereto.

As described above, the magnet portion 410 is disposed along the short side of the cell case 300 and the magnet coupling portion 420 is coupled to the magnet portion 410, and when they press the sealing portion 310, it may be possible to prevent gases from leaking through the sealing portion 310 formed near the electrode lead 200. Additionally, because the magnet portion 410 and the magnet coupling portion 420 press the sealing portion 310, the tensile force acting on the sealing portion 310 reduces, the sealing strength of the sealing portion 310 increases, and the moment at the corresponding part reduces, so the internal pressure is not concentrated on the sealing portion 310 and is uniformly distributed, leading to the uniform internal pressure of the entire cell case 300.

Eventually, it may be possible to make the internal pressure of the cell case 300 uniform, and prevent gases from leaking through any sealing portion 310, thereby reducing the fire risk.

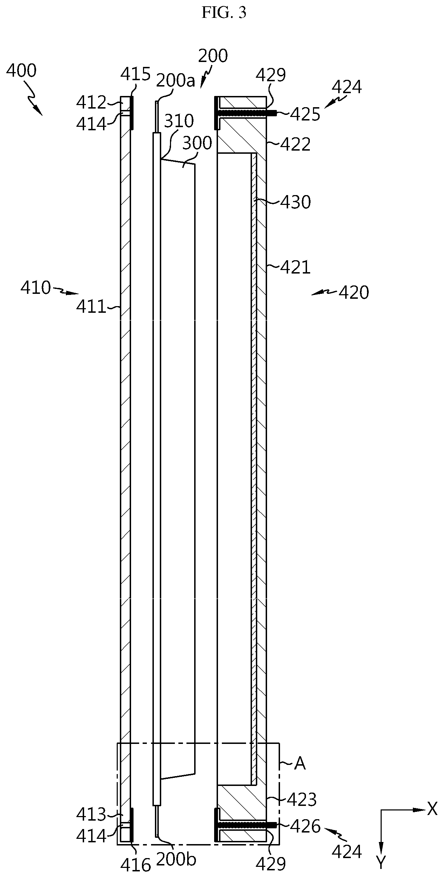

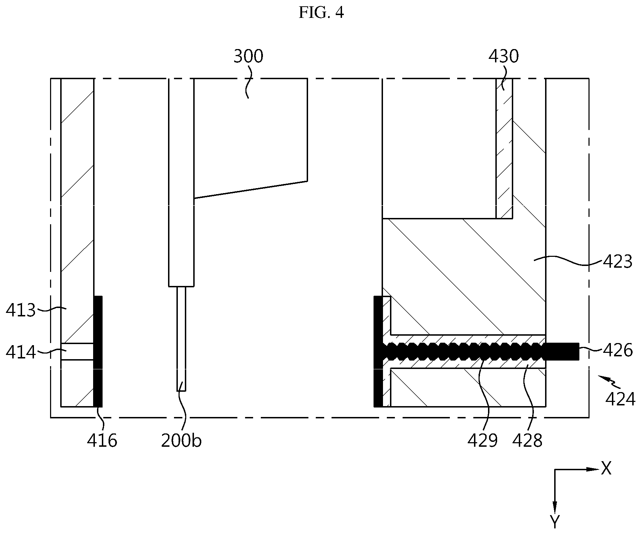

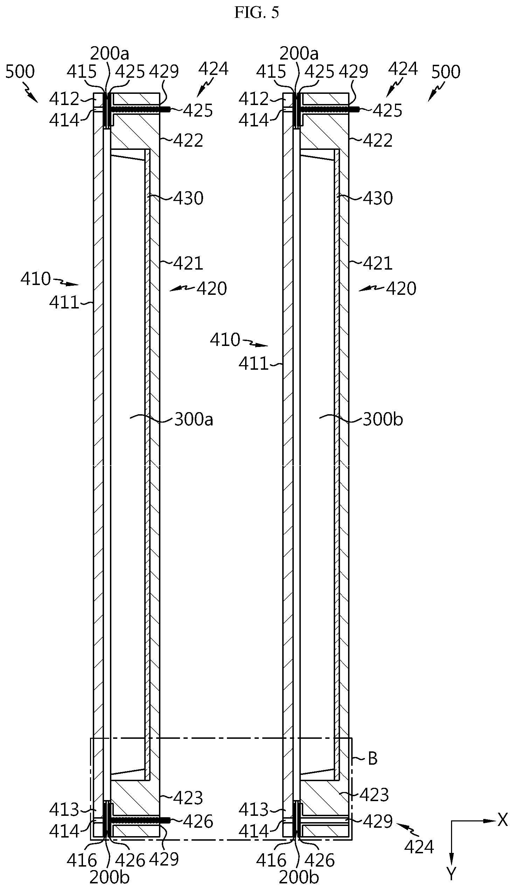

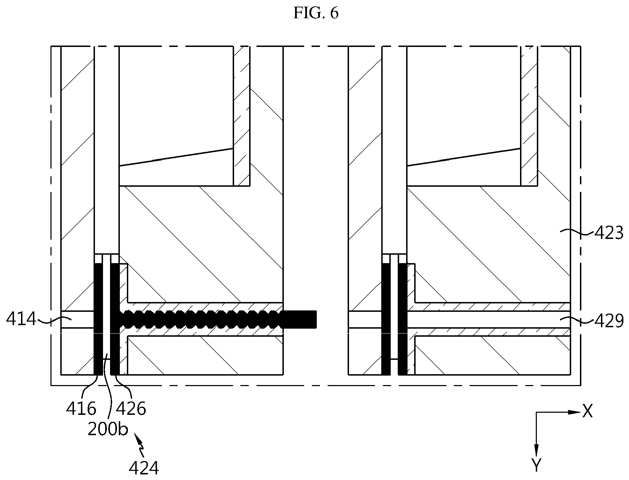

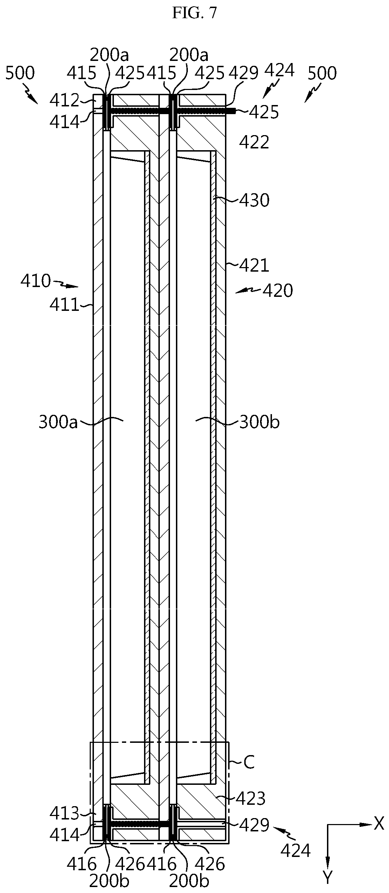

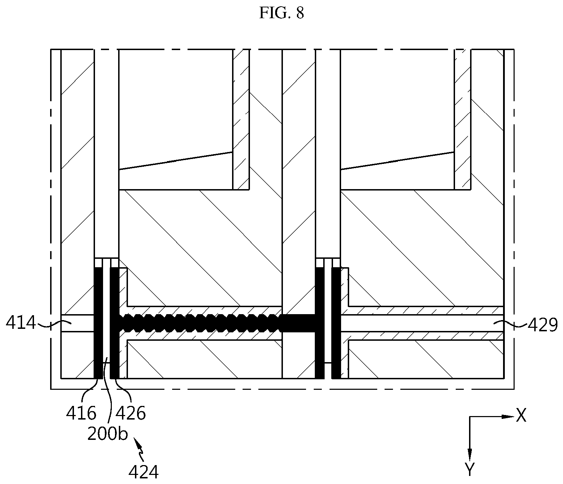

FIG. 3 is a plan view of the battery cell according to a second embodiment of the present disclosure, FIG. 4 is an enlarged view of section A in FIG. 3, FIG. 5 is a plan view of the plurality of battery cells according to the second embodiment of the present disclosure, FIG. 6 is an enlarged view of section B in FIG. 5, FIG. 7 is a diagram showing the plurality of battery cells coupled to each other in FIG. 5, and FIG. 8 is an enlarged view of section C in FIG. 7.

The second embodiment of the present disclosure is different from the first embodiment in that the internal pressure uniformization member 400 is coupled to the cell case 300 along the long side of the cell case 300. However, the common description already described in the first embodiment is replaced by the above description of the first embodiment. Additionally, any of the description of the second embodiment that may be applied to the first embodiment may be applied to the first embodiment.

The description of the electrode assembly 100, the electrode lead 200 and the cell case 300 is replaced by the above description of the first embodiment.

Referring to FIG. 3, the cell case 300 has a long side and a short side. FIG. 3 is a diagram of the battery cell 10 when viewed from the top, and on the basis of FIG. 3, the Y direction is the long side direction. In FIG. 3, the short side direction, i.e., Z direction is not indicated.

Referring to FIGs. 3 and 5, the internal pressure uniformization member 400 is coupled to the cell case 300 along the long side of the cell case 300. In the second embodiment, the internal pressure uniformization member 400 may cover the entire cell case 300. Alternatively, the internal pressure uniformization member 400 may be configured to partially cover the cell case 300 such that at least one side of the cell case 300 is exposed.

The internal pressure uniformization member 400 may be configured to support the cell case 300 in an upright position. The pouch-type cell case 300 is not easy to stack upright in the top-bottom direction due to the stiffness of the cell case 300.

However, the internal pressure uniformization member 400 may be configured to cover one or more cell cases 300, keeping the cell case 300 in the standing position, i.e., the upright position.

Additionally, the internal pressure uniformization member 400 may be configured to cover the cell case 300 such that at least one side of the cell case 300 is exposed toward the bottom surface of a module case 200 of a battery module 20 or a pack case 300 of a battery pack 30. That is, the battery cell 10 according to the second embodiment of the present disclosure may be kept in the upright position by the internal pressure uniformization member 400, and thereby stacked on the module case 200. In this case, the battery module 20 is received in the pack case 300.

Alternatively, the battery cell 10 may be directly received in the pack case 300, keeping in the upright position by the internal pressure uniformization member 400. In this case, the module case 200 may be omitted, and accordingly, more battery cells 10 may be received in the space occupied by the module case 200 in the pack case 300, thereby increasing the energy density.

Referring to FIG. 3, the internal pressure uniformization member 400 may include the magnet portion 410 and the magnet coupling portion 420. FIG. 3 is a plan view of the cell case 300 when viewed from the top, and in FIG. 3, the cell case 300 is placed in the top-bottom direction on the basis of FIG. 3, that is, the long side direction of the cell case 300, i.e., the Y direction in FIG. 3. Additionally, the first electrode lead 200a is disposed at the upper side, and the second electrode lead 200b is disposed at the lower side.

Here, the magnet portion 410 is formed with a length corresponding to the long side length of the cell case 300 and disposed along the long side of the cell case 300. The magnet portion 410 may be made of various magnetic materials, and for example, may include a neodymium magnet, but is not limited thereto.

Referring to FIGs. 3 and 5 together, the magnet portion 410 may include a first part 411, a second part 412 and a third part 413. In FIG. 3, the magnet is integrally formed, and the first part 411, the second part 412 and the third part 413 are integrally formed.

The first part 411 covers the cell case 300 along the long side of the cell case 300. The first part 411 may be configured to cover all or a part of the side of the cell case 300.

The second part 412 forms an end portion of the first part 411 and is electrically connected to the first electrode lead 200a of the electrode lead 200. In FIG. 3, the second part 412 forms the upper end portion of the first part 411 but is not limited thereto.

A first conductor 415 made of a material through which electricity flows easily may be coupled to the second part 412, and the first conductor 415 is electrically connected to the first electrode lead 200a (see FIG. 5). The first conductor 415 is coupled to the second part 412 by various methods, and for example, the first conductor 415 may be coupled to the second part 412 by a bonding method, but is not limited thereto.

The third part 413 forms the other end portion of the first part 411, and is electrically connected to the second electrode lead 200b of the electrode lead 200. In FIG. 3, the third part 413 forms the lower end portion of the first part 411 but is not limited thereto.

A second conductor 416 made of a material through which electricity flows easily may be coupled to the third part 413, and the second conductor 416 is electrically connected to the second electrode lead 200b (see FIG. 5). The second conductor 416 is coupled to the third part 413 by various methods, and for example, the second conductor 416 may be coupled to the third part 413 by a bonding method, but is not limited thereto.

Referring to FIGs. 3 and 5 together, the magnet coupling portion 420 is coupled to the magnet portion 410. That is, the magnet coupling portion 420 may be made of various materials that respond with the magnet. For example, the magnet coupling portion 420 may be made of steel, but is not limited thereto.

The magnet coupling portion 420 may include a fourth part 421, a fifth part 422 and a sixth part 423. In FIG. 3, the fourth part 421, the fifth part 422 and the sixth part 423 may be integrally formed.

The fourth part 421 covers the cell case 300 along the long side of the cell case 300 at the opposite location to the first part 411. For example, when the first part 411 of the magnet portion 410 covers the left side of the cell case 300 on the basis of FIG. 3, the fourth part 421 of the magnet coupling portion 420 may cover the right side of the cell case 300 on the basis of FIG. 3, but is not limited thereto.

Here, the fourth part 421 may be configured to cover all or a part of the side of the cell case 300. Meanwhile, referring back to FIG. 3, to buffer the cell case 300, a foam pad 430 may be coupled to the fourth part 421. The foam pad 430 may be made of polyurethane, but the material of the foam pad 430 is not limited thereto.

The fifth part 422 forms an end portion of the fourth part 421, and is electrically connected to the first electrode lead 200a of the electrode lead 200. In FIG. 3, the fifth part 422 forms the upper end portion of the fourth part 421 but is not limited thereto.

A third conductor 425 made of a material through which electricity flows easily may be coupled to the fifth part 422, and the third conductor 425 is electrically connected to the first electrode lead 200a (see FIG. 5). The third conductor 425 is coupled to the fifth part 422 by various methods, and for example, the third conductor 425 may be coupled to the fifth part 422 by forming a hole 429 in the fifth part 422 and inserting the third conductor 425 into the hole of the fifth part 422. However, the way the third conductor 425 is coupled to the fifth part 422 is not limited thereto.

The sixth part 423 forms the other end portion of the fourth part 421, and is electrically connected to the second electrode lead 200b of the electrode lead 200. In FIG. 3, the sixth part 423 forms the lower end portion of the fourth part 421 but is not limited thereto.

A fourth conductor 426 made of a material through which electricity flows easily may be coupled to the sixth part 423, and the fourth conductor 426 is electrically connected to the second electrode lead 200b (see FIG. 5). The fourth conductor 426 is coupled to the sixth part 423 by various methods, and for example, the fourth conductor 426 may be coupled to the sixth part 423 by forming a hole 429 (see FIG. 6) in the sixth part 423 and inserting the fourth conductor 426 into the hole 429 of the sixth part 423. However, the way the fourth conductor 426 is coupled to the sixth part 423 is not limited thereto.

Referring to FIG. 5, the magnet portion 410 and the magnet coupling portion 420 are coupled to the cell case 300 to form a cell unit 500. Additionally, referring to FIG. 7, a plurality of cell units 500 may be coupled to each other.

Here, the plurality of cell units 500 may be coupled to each other and stacked on the module case 200 of the battery module 20, or may be directly stacked on the pack case 300 of the battery pack 30 without the module case 200. That is, the magnet and the magnet coupling portion 420 has not only a function of pressing the sealing portion 310, but also a function of supporting the cell case 300 to keep the cell case 300 upright in the module case 200 or the pack case 300.

The plurality of cell units 500 may be coupled to each other by various methods, and for example, as shown in FIG. 5, the plurality of cell cases 300 may be stacked, each cell case to which the internal pressure uniformization member 400 is coupled by forming a connection hole 414 in the magnet portion 410, coupling a plug 424 to the magnet coupling portion 420, and referring to FIGs. 7 and 8, inserting the plug 424 of a first cell case 300a among the plurality of cell cases 300 into the connection hole 414 of a second cell case 300b among the plurality of cell cases 300. Here, the plug 424 coupled to the magnet coupling portion 420 may be included in the third conductor 425, and may be included in the fourth conductor 426. That is, the plug 424 is made of a material through which electricity flows easily.

Additionally, the plurality of cell units 500 coupled to each other by the above-described method may be stacked in the module case 200 or the pack case 300.

Here, referring to FIGs. 5 and 6, the plug 424 may be detachably coupled to the magnet coupling portion 420. Referring to FIG. 6, the plug 424 included in the fourth conductor 426 is removed in the area of the sixth part 423.

Because the plug 424 is included in the third conductor 425 or the fourth conductor 426 and is coupled to the first electrode lead 200a or the second electrode lead 200b, in the event that they are wrongly connected, for example, when they are connected in series with the same polarity, a short circuit may occur. To prevent this, if necessary, as shown in the right side of FIG. 6, the plug 424 may be removed from the hole 429 of the magnet coupling portion 420, or as shown in the left side of FIG. 6, the plug 424 may be inserted into the hole 429 of the magnet coupling portion 420 to connect the plurality of cell units 500. Here, the plug 424 may have a screw thread 429 for coupling on the periphery (see FIG. 4).

Referring to FIG. 4, an insulating layer 428 may be formed between the plug 424 and the magnet coupling portion 420. The insulating layer 428 is formed for electrical insulation between the magnet coupling portion 420 made of steel through which electricity flows easily and the plug 424 made of the material through which electricity flows easily. Here, the insulating layer 428 may be made of various materials, and for example, may be made of plastics, but the material of the insulating layer 428 is not limited thereto.

As described above, when the magnet portion 410 is disposed along the long side of the cell case 300, and the magnet coupling portion 420 is coupled to the magnet portion 410 and they press the sealing portion 310, it may be possible to prevent gases from leaking through the sealing portion 310 formed near the electrode lead 200 and reduce the fire risk in the same way as the first embodiment.

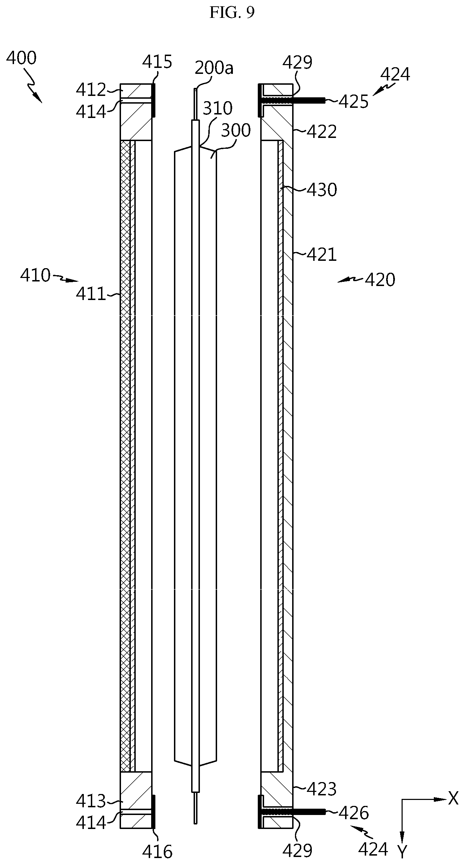

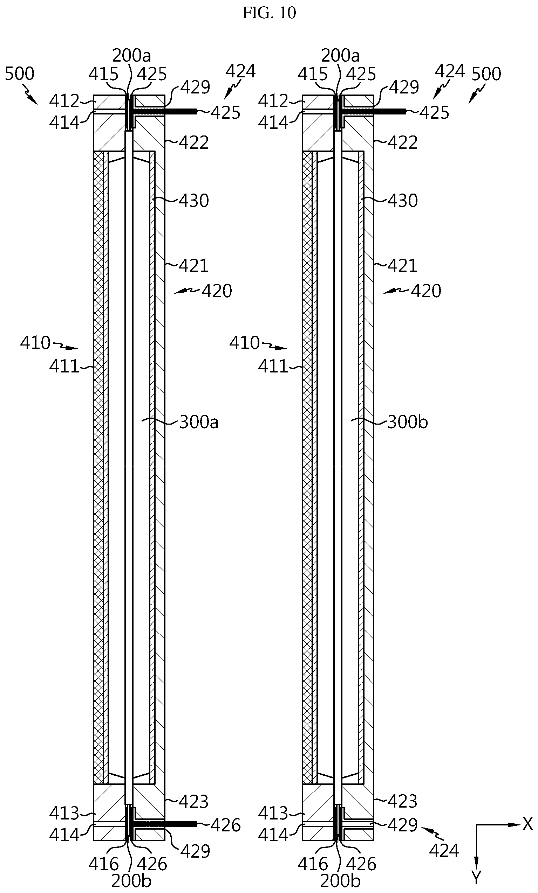

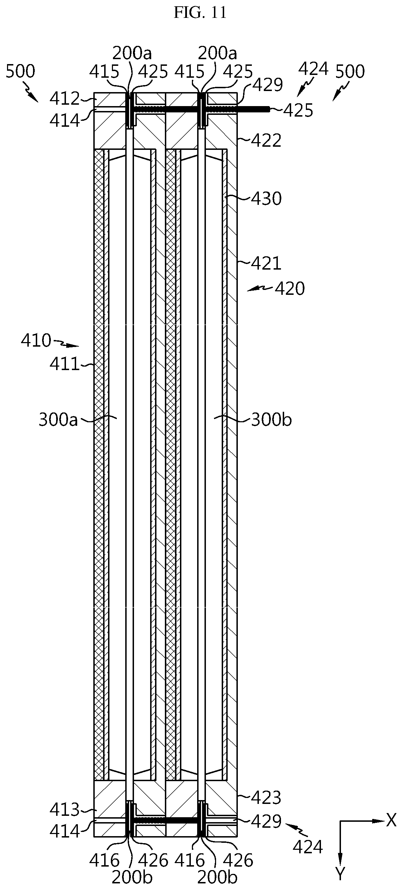

FIG. 9 is a plan view of the battery cell according to the third embodiment of the present disclosure, FIG. 10 is a plan view of the plurality of battery cells according to the third embodiment of the present disclosure, and FIG. 11 is a diagram showing the plurality of battery cells coupled to each other in FIG. 10.

The third embodiment of the present disclosure is different from the first embodiment and the second embodiment in the shape of the cell case 300, and accordingly there is a change in the structure of the internal pressure uniformization member 400. However, the common description already described in the first embodiment or the second embodiment is replaced by the foregoing description of the first embodiment or the second embodiment. Additionally, any of the description of the third embodiment that may be applied to the first embodiment or the second embodiment may be applied to the first embodiment or the second embodiment.

Referring to FIG. 9, the second part 412 and the third part 413 are a magnet. This is common to the second embodiment and the third embodiment, and its detailed description is omitted. However, the first part 411 is made of a non-magnetic material and is connected to each of the second part 412 and the third part 413.

Referring to FIG. 9, as opposed to FIG. 3, the cell case 300 is also protruded toward the magnet portion 410, and in FIG. 9, the magnet portion 410 has an inwardly recessed step portion so that the magnet portion 410 is coupled to the cell case 300. However, a magnet such as a neodymium magnet is difficult to machine to form a step. To make machining easy, the first part 411 is made of a non-magnetic material and is connected to each of the second part 412 and the third part 413, where the third embodiment is different from the second embodiment.

However, the magnet portion 410 and the magnet coupling portion 420 coupled to the cell case 300 to form one cell unit 500 in FIG. 10, and the plurality of cell units 500 coupled to each other in FIG. 11 are common to the second embodiment and the third embodiment, and this is replaced by the foregoing description of the second embodiment.

Also in the third embodiment, the magnet portion 410 may be made of a variety of magnetic materials, and for example, may include a neodymium magnet, but is not limited thereto.

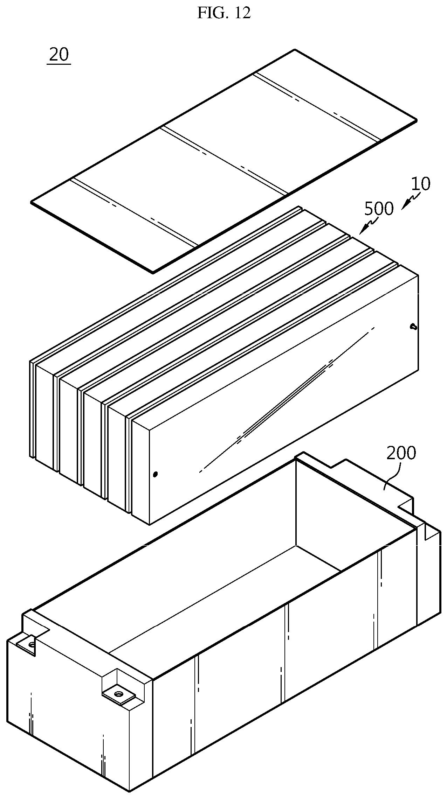

FIG. 12 is a diagram schematically showing the battery module including the battery cell according to each embodiment of the present disclosure.

Referring to FIG. 12, the battery module 20 according to an embodiment of the present disclosure may include at least one battery cell 10 according to an embodiment of the present disclosure as described above. In FIG. 12, the battery cells 10 form the cell units 500 and are stacked as schematically shown.

Here, the battery module 20 may include, for example, the module case 200 accommodating the plurality of battery cells 10 electrically connected to each other.

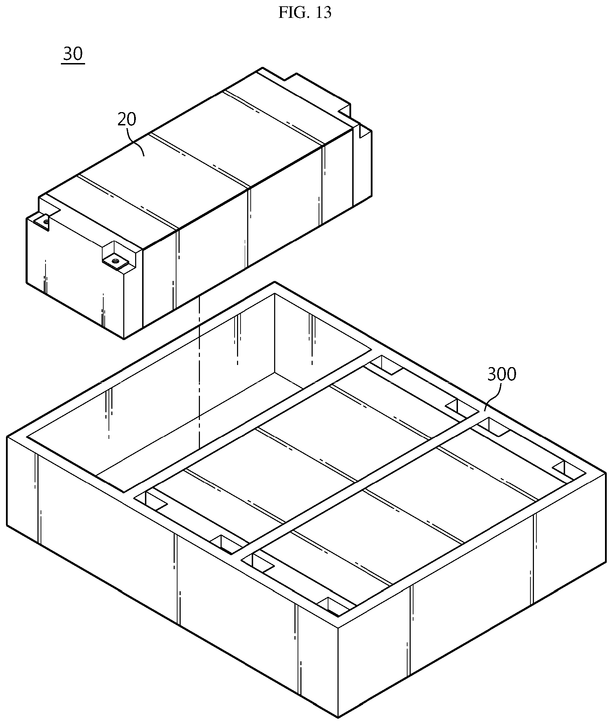

FIG. 13 is a diagram schematically showing the battery pack including the battery module according to each embodiment of the present disclosure.

Referring to FIG. 13, the battery pack 30 according to an embodiment of the present disclosure may include at least one battery cell 10 or battery module 20 according to an embodiment of the present disclosure as described above. Additionally, the battery pack 30 may further include the pack case 300 accommodating the battery cell 10 or the battery module 20, and various types of devices to control the charge and discharge of the battery cell 10, for example, a battery management system (BMS), a current sensor, a fuse, etc.

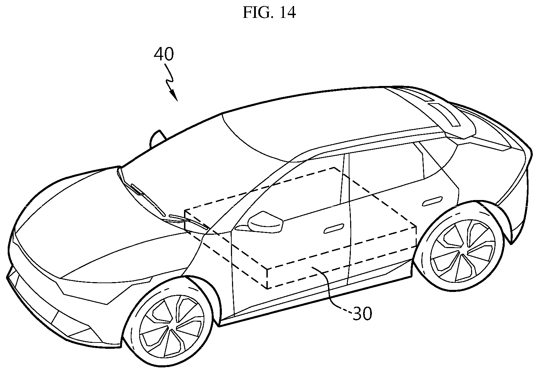

FIG. 14 is a diagram illustrating a vehicle including the battery pack according to each embodiment of the present disclosure.

Referring to FIG. 14, the vehicle 400 according to an embodiment of the present disclosure may include at least one battery cell 10 or battery module 20 or battery pack 30 according to each of the above-described embodiments. Here, the vehicle 400 includes, for example, various types of vehicles designed to use electricity such as electric vehicles or hybrid electric vehicles.

The terms indicating directions such as upper, lower, left and right are used for convenience of description, but it is obvious to those skilled in the art that the terms may change depending on the position of the stated element or an observer.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof. Therefore, these disclosed embodiments should be considered from a descriptive perspective, not a limitative perspective. That is, the true technical scope of the present disclosure is defined by the appended claims, and it should be interpreted that all differences within the equivalent scope are included in the present disclosure.

### INDUSTRIAL APPLICABILITY

The present disclosure relates to the battery cell, the battery module including the same, the battery pack including the same and the vehicle including the same, and in particular, may be used in the industry related to secondary batteries.

## Claims

1. A battery cell comprising:
an electrode assembly including a first electrode plate having a first polarity, a second electrode plate having a second polarity and a separator interposed between the first electrode plate and the second electrode plate;
an electrode lead connected to the electrode assembly;
a cell case accommodating the electrode assembly, and on which the electrode lead is supported, the cell case having a sealing portion; and
an internal pressure uniformization member coupled to at least part of the sealing portion of the cell case.

2. The battery cell according to claim 1, wherein the cell case has a long side and a short side, and
wherein the internal pressure uniformization member is coupled to the sealing portion located near the electrode lead along the short side of the cell case.

3. The battery cell according to claim 2, wherein the internal pressure uniformization member includes:
a magnet portion formed with a length corresponding to a length of the short side of the cell case and disposed along the short side; and
a magnet coupling portion coupled to the magnet portion.

4. The battery cell according to claim 3, wherein the magnet portion includes a neodymium magnet.

5. The battery cell according to claim 1, wherein the cell case has a long side and a short side, and
wherein the internal pressure uniformization member is coupled to the cell case along the long side of the cell case.

6. The battery cell according to claim 5, wherein the internal pressure uniformization member includes:
a magnet portion formed with a length corresponding to a length of the long side of the cell case and disposed along the long side; and
a magnet coupling portion coupled to the magnet portion.

7. The battery cell according to claim 6, wherein the magnet portion includes:
a first part covering the cell case along the long side of the cell case;
a second part that forms an end portion of the first part, and is electrically connected to a first electrode lead of the electrode lead; and
a third part that forms the other end portion of the first part, and is electrically connected to a second electrode lead of the electrode lead.

8. The battery cell according to claim 7, comprising:
a first conductor and a second conductor,
wherein the first conductor is coupled to the second part, and the second conductor is coupled to the third part.

9. The battery cell according to claim 6, wherein the magnet coupling portion includes:
a fourth part covering the cell case along the long side of the cell case;
a fifth part that forms one end portion of the fourth part, and is electrically connected to a first electrode lead of the electrode lead; and
a sixth part that forms the other end portion of the fourth part, and is electrically connected to a second electrode lead of the electrode lead.

10. The battery cell according to claim 9, wherein a foam pad is coupled to the fourth part.

11. The battery cell according to claim 9, comprising:
a third conductor and a fourth conductor,
wherein the third conductor is coupled to the fifth part, and the fourth conductor is coupled to the sixth part.

12. The battery cell according to claim 6, wherein the magnet portion has a connection hole,
wherein a plug is coupled to the magnet coupling portion, and
wherein when a plurality of cell cases is stacked, each cell case to which the internal pressure uniformization member is coupled, the plug of a first cell case among the plurality of cell cases is inserted into the connection hole of a second cell case among the plurality of cell cases.

13. The battery cell according to claim 12, wherein the plug is detachably coupled to the magnet coupling portion.

14. The battery cell according to claim 12, wherein an insulating layer is formed between the plug and the magnet coupling portion.

15. The battery cell according to claim 7, wherein the second part and the third part is a magnet, and the first part is a non-magnet connected to the magnet.

16. The battery cell according to claim 6, wherein the magnet portion includes a neodymium magnet.

17. A battery module comprising the battery cell according to any one of claims 1 to 16.

18. A battery pack comprising the battery cell according to any one of claims 1 to 16.

19. A vehicle comprising the battery cell according to any one of claims 1 to 16.
